# EUROPÄISCHE PATENTANMELDUNG

(11) **EP 4 674 507 A1**
(43) Veröffentlichungstag der Anmeldung: **07.01.2026**
(21) Anmeldenummer: 24186843.9
(22) Anmeldetag: 05.07.2024
(51) Int. Cl.: B01D 53/04

(54) **VERFAHREN ZUM ABSONDERN VON KOHLENDIOXID AUS EINEM GASGEMISCH UND VORRICHTUNG HIERZU**

(71) Anmelder: Siemens Aktiengesellschaft, 80333 München (DE)
(72) Erfinder: Danov, Vladimir, 91056 Erlangen (DE); Hammer, Thomas, 91334 Hemhofen (DE)
(74) Vertreter: Siemens Patent Attorneys

(57) **Zusammenfassung**

Die Erfindung betrifft ein Verfahren zum Absondern von Kohlendioxid (2) aus einem Gasgemisch (4), wobei das Gasgemisch (4) durch ein festes Sorptionsmittel (6) geleitet wird, wobei das im Gasgemisch (4) enthaltene Kohlendioxid (2) vom Sorptionsmittel (6) sorbiert wird und ein Sorbat (8) entsteht und ein Spülfluid (10) auf eine Temperatur erhitzt wird, die dazu geeignet ist, das Kohlendioxid (2) aus dem Sorbat (8) zu desorbieren und mit dem Spülfluid (10) auszuspülen, wonach das Spülfluid (10) zur Auslösung des Kohlendioxids (2) abgekühlt wird, dadurch gekennzeichnet, dass
- eine Wärmepumpe (12) vorgesehen ist, die einen Verdampfer (14) und einen Kondensor (16) aufweist, zwischen denen ein Kältemittel (18) zirkuliert und
- der Verdampfer (14) und das abzukühlende Spülfluid (10) in thermischer Interaktion gebracht werden und
- der Kondensor (16) mit dem zu erhitzenden Spülfluid (10) in thermischer Interaktion gebracht wird

## Beschreibung

Die Erfindung betrifft ein Verfahren zum Absondern von Kohlendioxid aus einem Gasgemisch nach dem Oberbegriff des Patentanspruchs 1 sowie eine Vorrichtung zum Abtrennen von Kohlendioxid aus einem Gasgemisch nach dem Oberbegriff des Patentanspruchs 12.

Um den Temperaturanstieg weltweit auf Werte von 1,5 K oder kleiner zu begrenzen, müssen etwa 20 Jahre negative Kohlendioxid-Emissionen erreicht werden. Dies erfordert nicht nur Netto-Null-Emissionen von Energieumwandlungsprozessen, sondern auch die Entfernung von Kohlendioxid aus der Umgebungsluft mittels der sogenannten DirectAir Capture (DAC)-Technologie. Aus thermodynamischen Gründen ist Energie notwendig, Kohlendioxid aus Luft oder Abgasen abzuscheiden, zu transportieren und entweder sicher zu speichern, sodass eine erneute Emission vermieden wird (CCS: Carbon Capture and Storage) oder als Kohlenstoffrohstoff für die chemische Industrie zu nutzen (CCU: Carbon Capture and Utilization). Die Bereitstellung der für DAC benötigten Energie muss weniger Kohlendioxid ausstoßen als abgeschieden wird.

Generell stehen zwei Verfahren zur Kohlendioxidabtrennung aus Luft zur Verfügung. Zum einen eine Temperaturwechseladsorption und eine Druckwechseladsorption. Dabei ist das robustere Verfahren aus diesseitiger Sicht die Temperaturwechseladsorption. In Bezug auf das Sorptionsmittel und auf den Reaktor kann der Prozess z. B. auf einem Festbett oder in einem Wirbelschichtreaktor oder über flüssiges Sorptionsmittel betrieben werden. Bisher wurde die Demonstration von DAC im Pilotmaßstab beispielsweise in Island mit einem Festbettreaktor und einer Temperaturwechseladsorption durchgeführt, was von der Firma Climeworks betrieben wird. Hierbei erfolgt die Adsorption bei einer Temperatur von < 50°C mit einem Luftventilator und einem Festbettabsorber. Für die thermische Regeneration, die bei Temperaturen über 100°C erfolgt, wird Geothermie genutzt, die in Island leicht verfügbar ist. Kontinuierliche regenerative Energie in Form von Geothermie ist jedoch weltweit nur selten verfügbar, weshalb der Abtrennprozess von Kohlendioxid aus einem Gasgemisch, also beispielsweise der Luft, mit verfügbarer Energie betrieben werden muss, die zum Teil selbst unter Ausstoß von Kohlendioxid erzeugt wird.

Die Aufgabe der Erfindung besteht darin, ein Verfahren sowie eine Vorrichtung bereitzustellen, mittels dem bzw. mittels der Kohlendioxid aus einem Gasgemisch wie beispielsweise Luft abgeschieden wird, und dabei der Verbrauch von Kohlendioxid für die bereitgestellte Energie reduziert wird.

Die Lösung Aufgabe besteht in einem Verfahren mit den Merkmalen des Patentanspruchs 1 sowie in einer Vorrichtung mit den Merkmalen des Patentanspruchs 12.

Die Lösung der Aufgabe besteht in einem Verfahren zum Absondern von Kohlendioxid aus einem Gasgemisch, wobei das Gasgemisch durch ein festes Sorptionsmittel geleitet wird und wobei das im Gasgemisch enthaltene Kohlendioxid (CO₂) vom Sorptionsmittel sorbiert wird und dabei ein Sorbat entsteht und ein Spülfluid auf eine Temperatur erhitzt wird, die dazu geeignet ist, das Kohlendioxid aus dem Sorbat zu desorbieren und mit dem Spülfluid auszuspülen, wonach das Spülfluid zur Auslösung des Kohlendioxids abgekühlt wird. Die Erfindung zeichnet sich dadurch aus, dass eine Wärmepumpe vorgesehen ist, die einen Verdampfer und einen Kondensor aufweist, zwischen denen ein Kältemittel zirkuliert und der Verdampfer und das abzukühlende Spülfluid in thermische Wirkverbindung gebracht werden und der Kondensor mit dem zu erhitzenden Spülfluid in thermische Wirkverbindung gebracht wird. Beim Erhitzen des Spülfluids kommt es bevorzugt zu einem Verdampfen des Spülfluids, und umgekehrt kommt es beim Abkühlen des Spülfluids bevorzugt zu einem Kondensieren des Spülfluids.

Der Vorteil der vorliegenden Erfindung gegenüber dem Stand der Technik besteht darin, dass zum einen zum Aufwärmen des Spülfluids zum Ausspülen des Kohlendioxids aus dem Sorbat eine Wärmepumpe eingesetzt wird, an sich bereits deutlich weniger Energie verbraucht als eine andere Heizmethode und dabei CO₂-neutral betreibbar ist und dass diese Wärmepumpe noch so in den Kreislauf eingebaut ist, dass die Wärmeenergie, die das Spülfluid nach dem Ausspülen aufweist, für das Aufheizen des Spülfluids nach dem Ausscheiden des Kohlendioxids eingebracht werden kann.

Dabei werden für die hier verwendeten Begriffe folgende Definitionen eingeführt:
Ein Gasgemisch ist insbesondere Luft, die von Natur aus Kohlendioxid enthält, es kann aber auch ein Abgas, z. B. aus einem Zementwerk sein.

Sorption ist eine Sammelbezeichnung für Vorgänge, die zu einer Anreicherung eines Stoffes innerhalb einer Phase oder auf einer Grenzfläche zwischen zwei Phasen führen. Die Anreicherung innerhalb einer Phase nennt man genauer Absorption, die an der Grenzfläche Adsorption. Der sorbierende Stoff wird Sorbent oder Sorptionsmittel genannt. Der noch nicht sorbierte Stoff (in dem vorliegenden Fall das Kohlendioxid) wird als Sorptiv bezeichnet, während er nach der Sorption Adsorpt bzw. Absorpt genannt wird. Das System aus an- bzw. eingelagertem (sorbiertem) Stoff mit dem Sorptionsmittel zusammen wird als Sorbat bezeichnet.

Das Spülfluid, das durch den Festbettreaktor bevorzugt in der Gasphase oder Dampfphase geleitet wird, ist grundsätzlich auch als Sorptionsmittel anzusehen. Es kann das Kohlendioxid aus dem festen Sorptionsmittel herauslösen, dabei ebenfalls adsorbieren oder absorbieren oder lösen. Unter der Dampfphase wird das gleichzeitige Vorliegen eines Mediums in Gasform und in flüssiger Form verstanden, wobei die flüssige Phase dabei in kleinen Tröpfchen vorliegt.

Thermische Interaktion umfasst alle Wärmetauschprozesse, die auf Wärmeleitung und Wärmestrahlung basieren. Hierunter fallen zum Beispiel Wärmetauscher nach dem Gegenstromprinzip, dem Gleichstromprinzip und dem Kreuzstromprinzip aber auch Kühlkörper die von einem Fluid (z. B. Luft, Wasser) umströmt werden. Hierbei können die Wärmetauschmedien unterschiedlicher Paarung sein, z. B. fest/flüssig, gasförmig/flüssig, gasförmig/fest sowie flüssig/flüssig und gasförmig/gasförmig. Auch Aggregatszustandsänderungen während der thermischen Interaktion sind möglich. Für den Fall, dass Fluide als Wärmeträger im Wärmetauschvorgang eingesetzt werden, soll eine Vermischung von Fluide in der wärmeübertragenden Systemen vermieden werden.

In einer weiteren Ausgestaltungsform der Erfindung ist für das beschriebene Verfahren ein Prozesssteuerungssystem vorgesehen, das in Verbindung mit einem Energieversorgungsnetz steht und ein Schwellwert für eine Zustandsgröße des Energieversorgungsnetzes festgelegt wird, und der Kondensor der Wärmepumpe mit einem ersten Wärmespeicher in thermische Interaktion geschaltet wird, wenn der Schwellwert erreicht wird.

Schwellwert und Zustandsgröße: Die Zustandsgröße eines Energieversorgungsnetzes ist eine Größe, die den Energieinhalt, die verfügbaren Energiemengen und die Netzstabilität beschreibt. Sie kann dabei eine direkt Zustandsgröße sein, wie beispielsweise die Netzfrequenz, sie kann aber auch eine indirekte Zustandsgröße sein, wie beispielsweise ein Preis an der Strombörse, der eben indirekt den technischen Netzzustand widerspiegelt. Der Schwellwert der Zustandsgröße kann daher von oben oder unter erreicht werden, je nachdem wie die Zustandsgröße gewählt ist. Unter dem Begriff "erreicht" wird demnach auch erreicht und überschritten, bzw. unterschritten verstanden, je nachdem von welcher Seite der Schwellwert erreicht wird. Ist die Zustandsgröße der Preis am Strommarkt, dann erfolgt der Wärmebehandlungsschritt zur Desorption in der Zeit, in der der Strompreis kleiner oder gleich dem Schwellwert ist. Ist die Zustandsgröße beispielsweise eine Energiemenge, die von Erzeugern in das Energienetz eingespeist wird, so wird der Schwellwert von unten erreicht und der Wärmebehandlungsschritt zur Desorption des Kohlendioxids erfolgt, wenn die Energiemenge größer oder gleich dem Schwellwert ist.

Der Vorteil dieser beschriebenen Ausgestaltungsform besteht darin, dass der Kondensor der Wärmepumpe nur dann mit dem Wärmespeicher in thermische Interaktion gebracht wird, wenn genügend regenerative Energie, die auf Basis einer minimalen Kohlendioxidausscheidung erzeugt wird, bereitsteht. Die Zustandsgröße steht also für die Menge von regenerativ erzeugter Energie im Energieversorgungsnetz und der Schwellwert ist dann erreicht, wenn genügend dieser regenerativ erzeugten Energie im Energieversorgungsnetz vorliegt. Das heißt der erste Wärmespeicher wird bevorzugt dann mit Wärmeenergie über die Wärmepumpe und deren Kondensor versorgt, wenn dieser Schwellwert erreicht bzw. überschritten oder je nach Art der Zustandsgröße unterschritten ist. Diese Ausgestaltungsform trägt ebenfalls dazu bei, den Ausstoß von Kohlendioxid bei dem beschriebenen Verfahren zur Abtrennung von Kohlendioxid aus dem Fluid-Gemisch, also insbesondere der Luft, noch weiter zu reduzieren.

Der erste Wärmespeicher kann somit von der Wärmepumpe mit Wärmeenergie versorgt werden, wenn die beschriebenen Voraussetzungen erfüllt sind und kontinuierlich weiter Energie an den Prozess zur Erhitzung des Spülfluids abgeben, indem er mit dem zu erhitzenden Spülfluid in thermische Interaktion gebracht wird. Das heißt auch wenn die Wärmepumpe nicht läuft und der erste Wärmespeicher nicht in thermische Interaktion mit dem ersten Wärmespeicher steht, kann der Prozess auf diese Weise kontinuierlich betrieben werden. Die thermische Interaktion zwischen dem Spülfluid und dem Kondensor besteht somit über den ersten Wärmespeicher, insofern indirekt, da sie nicht in direkter zeitlicher Abhängigkeit steht. Der erste Wärmespeicher wird daher mit dem zu erhitzenden Spülfluid dann in thermische Wirkverbindung gebracht, wenn der genannte Schwellwert eben nicht erreicht ist.

Die verwendete Wärmepumpe ist dabei bevorzugt in der Art ausgestaltet, dass am Kondensor eine Temperatur zwischen 100°C und 160°C erreicht wird. Hierbei handelt es sich um eine sogenannte Hochtemperaturwärmepumpe, die grundsätzlich nach demselben Prinzip arbeitet, wie eine herkömmliche Wärmepumpe, durch die Verwendung bestimmter Kältemittel bzw. entsprechender Verdichtung wird jedoch eine Temperatur erreicht, die über 100°C liegt und dabei auch Spülfluids auf wässriger Basis in die Gasphase überführen kann. Das heißt, dass das Spülfluid auf eine Temperatur erhitzt wird, die über seinem Siedepunkt liegt. Auf diese Weise kann das Spülfluid in gasförmiger oder dampfförmiger Form durch das feste Sorbat geleitet werden und auf diese Weise das Kohlendioxid aus dem gesättigten Sorptionsmittel also dem Sorbat, besser herausspülen oder herauslösen. Das Spülfluid ist in einer Ausgestaltungsform dabei Wasser oder es besteht auf wässriger Basis und umfasst mindestens 90 % Wasser.

In einer weiteren Ausgestaltungsform der Erfindung ist das Verfahren derart ausgestaltet, dass ein zweiter Wärmespeicher vorgesehen ist, der in thermischer Wirkverbindung mit dem Spülfluid während dessen Abkühlung steht.

In einer weiteren Ausgestaltungsform dient das Spülfluid als Kältemittel der Wärmepumpe. Dies hat den Vorteil, dass weniger Wärmetauschprozesse zwischen verschiedenen Medien ablaufen müssen, was eine weitere thermische Optimierung des Verfahrens und weniger Energieverlust bedeutet.

Ein weiterer Bestandteil der Erfindung ist eine Vorrichtung zum Absondern von Kohlendioxid aus einem Fluid-Gemisch mit den Merkmalen des Patentanspruchs 12, wobei diese Vorrichtung einen Festbettreaktor aufweist, in dem ein Sorptionsmittel anordenbar ist und eine Durchströmungsvorrichtung zur Durchströmung eines Fluid-Gemischs durch den Festbettreaktor vorgesehen ist. Ferner umfasst die Vorrichtung eine Ventilvorrichtung zur wechselnden Freischaltung der Durchströmungsvorrichtung und einer Spülfluid-Zuführung, mittels derer Spülfluid durch den Festbettreaktor leitbar ist. Ferner ist eine Spülfluid-Abkühlvorrichtung und eine Kohlendioxid-Abtrennvorrichtung zur Abtrennung des Kohlendioxids aus dem Spülfluid vorgesehen. Hinzu kommt eine Spülfluid-Aufheizvorrichtung zum Aufheizen des Spülfluids und zum weiteren Einbringen des Spülfluids über die Ventilvorrichtung in den Festbettreaktor. Die Erfindung zeichnet sich dadurch aus, dass eine Wärmepumpe vorgesehen ist, die einen Verdampfer und einen Kondensor aufweist, wobei der Verdampfer in thermischer Interaktion mit der Spülfluid-Abkühlvorrichtung steht und der Kondensor in thermischer Interaktion mit der Spülfluid-Aufheizvorrichtung steht.

Die beschriebene Vorrichtung weist dieselben Vorteile gegenüber dem Stand der Technik auf, die bereits zum Verfahren erläutert sind. Diese sind insbesondere der energetisch vorteilhafte Betrieb der Vorrichtung zur Abtrennung von Kohlendioxid aus einem Fluid-Gemisch mit einem möglichst geringen Ausstoß an Kohlendioxid selbst.

In einer weiteren Ausgestaltungsform ist die Spülfluid-Aufheizvorrichtung Teil des Verdampfers der Wärmepumpe selbst. Ferner ist es zweckmäßig, wenn die Spülfluid-Abkühlvorrichtung Teil des Kondensors der Wärmepumpe ist, wodurch sowohl der Verdampfer als auch der Kondensor mit dem Spülfluid betreibbar sind und somit Wärmetauschverluste reduziert bzw. vermieden werden. Der Wirkungsgrad der Wärmepumpe und somit des Prozesses wird durch diese Ausgestaltung der Vorrichtung weiter erhöht. Hierbei ist das Spülfluid das Kältemittel der Wärmepumpe.

Weitere Ausgestaltungsformen und weitere Merkmale werden anhand der folgenden Figuren näher erläutert. Dabei handelt es sich um rein schematische Darstellungen des Verfahrens und der Vorrichtung, die keine Einschränkung des Schutzbereiches darstellen. Merkmale mit derselben Bezeichnung, jedoch in unterschiedlichen Ausgestaltungsformen werden dabei mit denselben Bezugszeichen, gegebenenfalls mit einem Hochstrich versehen.

Dabei zeigen:
- Figur 1: ein Verfahren und eine Vorrichtung zum Abtrennen von Kohlendioxid aus einem Gasgemisch in einem Festbettreaktor unter Verwendung einer Wärmepumpe,
- Figur 2: die Vorrichtung und das Verfahren gemäß Figur 1, wobei die Vorrichtung über ein Prozesssteuerungssystem mit einem Energieversorgungsnetz in Verbindung steht.

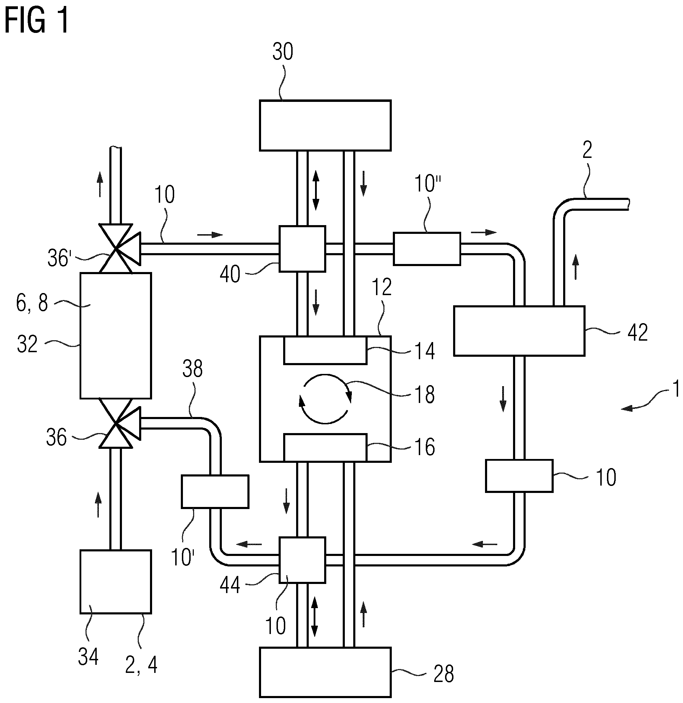

Das in Figur 1 beschriebene Verfahren und die dazugehörige Vorrichtung zur Abtrennung von Kohlendioxid 2 aus einem Gasgemisch 4 wird als Direct Air Capture, DAC-Verfahren 1 bezeichnet. Es soll beginnend mit einem Festbettreaktor 32 auf der linken Seite der Abbildung beschrieben werden. In dem Festbettreaktor 32 ist ein Sorptionsmittel 6 in Festform bereitgestellt, dass beispielsweise auf einer tragenden Wabenstruktur zu Erzielung einer großen Oberfläche aufgetragen ist. Die Ausgestaltung ist technisch ähnlich einem Katalysators im Automobilbau aufgebaut. Ferner ist eine Durchströmungsvorrichtung 34 vorgesehen, die in Form eines Gebläses ausgestaltet ist, mittels der ein Fluid-Gemisch 4, in der Regel Luft oder ein Abgas aus einem thermischen Prozess, in den Festbettreaktor 32 geblasen wird. Dies erfolgt durch eine Ventilvorrichtung 36, die dem Festbettreaktor 32 vorgeschaltet ist.

Da das Fluid-Gemisch 4, sei es herkömmliche Luft oder ein Abgas, stehts Kohlendioxid 2 enthält, wird durch dieses in den Festbettreaktor 32 und durch das Sorptionsmittel 6 auch Kohlendioxid 2 geführt. Das Sorptionsmittel 6 ist dabei beispielsweise ein Zeolith, dessen Selektivität für das Kohlendioxid 2 durch die Zusammensetzung passend eingestellt ist (z.B. Zeolith 5A oder Zeolith 13X), oder Silica Gel oder aktiviertes Aluminiumoxid, deren Selektivität für das Kohlendioxid 2 durch Imprägnierung mit Iminen oder Aminen oder Behandlung mit Salz- oder Hydroxidlösungen eingestellt werden kann. Dieses Sorptionsmittel 6 ist mit möglichst großer Oberfläche auf einem Träger, beispielsweise in Wabenstruktur aufgebracht, sodass möglichst viel Kohlendioxid an der Oberfläche der Trägerstruktur, die mit dem Sorptionsmittel 6 beschichtet ist, abgeschieden werden kann. Wenn die Absorptionsrate aufgrund der Sättigung des Sorptionsmittels 6 mit dem Kohlendioxid 2 abnimmt, wird das Sorptionsmittel 6 nun im gesättigten Zustand als Sorbat 8 bezeichnet. In diesem Zustand werden nun durch die Ventilvorrichtung 36 der Zustrom von Fluid-Gemisch 4 unterbrochen und es wird ein dampfförmiges oder gasförmiges Spülfluid 10 in den Festbettreaktor 32 über das nun entstandene Sorbat 8 eingeleitet. Dieses Spülfluid 10 kann beispielsweise Wasserdampf mit ausreichend hoher Temperatur sein, der dem Sorbat 8 die nötige Wärme zuführt, um das Kohlendioxid 2 durch Temperaturerhöhung aus dem Sorbat 8 durch Desorption freizusetzen und dadurch das Sorptionsmittel 6 wiederherzustellen. Die Menge an Kohlendioxid 2, die das dampf- oder gasförmige Spülfluid 10 dabei aus dem Sorbat 8 aufnehmen kann, wird als Produkt des CO2-Partialdrucks mit dem gesamten Gasvolumen berechnet und steigt dabei gemäß einer Langmuir Isotherme mit der erreichbaren Temperatur, wobei die über das Spülfluid 10 zugeführte Wärme nicht nur die Temperatur des Sorbats 8 erhöhen, sondern auch die Desorptinsenthalpie des Kohlendioxids 2 bereitstellen muss. Dabei bleibt das Sorptionsmittel 6 auf dem Trägermaterial in dem Festbettreaktor räumlich unverändert. Ist das Sorptionsmittel 6 durch Desorption des Kohlendioxids 2 vom Sorbat 8 ausreichend regeneriert, wird die Ventilvorrichtung 36 wieder umgeschaltet und es wird erneut bis zu Sättigung des Sorptionsmittels 6 Gasgemisch 4 durch den Festbettreaktor geleitet.

Das mit dem CO₂ beladene Spülfluid 10 wird aus dem Festbettreaktor 32 herausgeleitet und über eine Abkühlvorrichtung in Form eines Kondensors abgekühlt und dabei von der Dampfphase 10' in die flüssige Phase 10" überführt. In der flüssigen Phase 10" ist die Sättigungskonzentration des Kohlendioxids 2 im Spülfluid 10 gemäß Henry'schem Gesetz durch die temperaturabhängige CO2-Löslichkeitskonstante und den CO2-Partialdruck über der flüssigen Phase 10" gegeben und deshalb wesentlich niedriger als in der Dampfphase 10`. Wasser bei 25°C hat z.B. eine CO2-Löslichkeitskonstante von 1,5 g/(liter bar), was in der Dampfphase einer CO2-Volumenkonzentration von 0,06 % entsprechen würde. Im Weiteren wird das Kohlendioxid 2 durch Druckentspannung aus dem flüssigen Spülfluid 10"herausgelöst und das Kohlendioxid 2 zu einer weiteren Verarbeitung beispielsweise zu einem Reinigungs- und einem Kompressionsprozess zugeführt, der hier nicht näher beschrieben ist. Das vom Kohlendioxid 2 befreite Spülfluid 10 wird nun im Weiteren wieder dem Prozess zugeführt und in der Spülfluid-Aufheizvorrichtung 44 wieder in Dampf- oder Gasform übergeführt, um es erneut in den Festbettreaktor 32 durch die Ventilvorrichtung 36 einzuleiten.

Der so beschriebene Prozess und die so beschriebene Vorrichtung werden im Weiteren vorteilhaft weitergestaltet, indem eine Wärmepumpe 12 vorgesehen ist, die die Aufheizung des Spülfluids 10 in der Spülfluid-Aufheizvorrichtung 44 betreibt. Diese Wärmepumpe 12 weist einen Verdampfer 14 und einen Kondensor 16 auf, die über ein Kältemittel 18 miteinander verbunden sind. Das Kältemittel 18 wird in dem Verdampfer 14 verdampft, über einen Kompressor, der hier nicht explizit dargestellt ist, in Gasform verdichtet und im Kondensor wieder zu einer Flüssigkeit kondensiert. Während der Kondensation gibt das Kältemittel Wärme über einen Wärmetauschprozess an einen Wärmespeicher 28 oder direkt an die Spülfluid-Aufheizvorrichtung 44 ab. Das so kondensierte Kältemittel 18 steht weiterhin unter dem hohen Druck, der durch den Kompressor eingebracht wird und wird in einem ebenfalls nicht hier dargestellten Entspannungsventil vom Druck reduziert und in flüssiger Form mit reduziertem Druck (der in der Regel höher als der Atmosphärendruck ist) wieder dem Verdampfer zugeführt.

Der erste Vorteil der beschriebenen Wärmepumpe 12 im DAC-Verfahren 1 gemäß Figur 1 besteht darin, dass energetisch günstig die Wärme zum Aufheizen und Verdampfen des Spülfluids 10 durch die Wärmepumpe 12 bereitgestellt werden kann. Ferner ist es durch die Wärmepumpe 12 möglich, dass das erhitzte, aus dem Festbettreaktor 32 ausgeleitete Spülfluid 10 abgekühlt wird und hierbei die Wärmeenergie an den Verdampfer 14 abgibt. Das Aufheizen und das Abkühlen des Spülfluids 10 wird jeweils durch einen Wärmetauschprozess, also durch eine thermische Interaktion in die Wärmepumpe 12 eingebracht. Es wird demnach über den Verdampfer 14 eingebracht und wieder über den Kondensor 16 ausgeleitet und zum Aufheizen verwendet. Der thermische Verlust bei dem Prozess durch die jeweilige thermische Interaktion des Verdampfers 14 und des Kondensors 16 in dem Auf- und Abkühlprozess des Spülfluids 10 ist gering und minimiert den thermischen Verlust und somit die Energie, die in den Prozess eingeleitet werden muss.

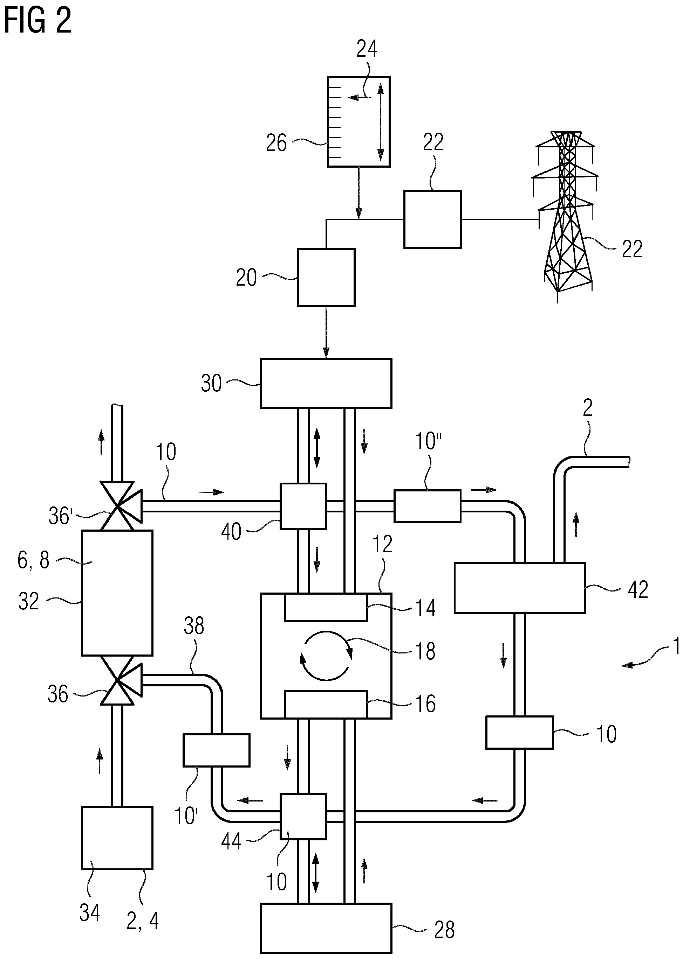

Ferner sind noch ein erster Wärmespeicher 28 und ein zweiter Wärmespeicher 30 vorgesehen, auf deren Verwendung im Weiteren eingegangen wird. Dies erfolgt insbesondere an der erweiterten Darstellung der Figur 1 in Figur 2. Figur 2 zeigt dieselbe Vorrichtung und dasselbe Verfahren, das bereits in Figur 1 beschrieben ist, es weist jedoch noch ein zusätzliches Merkmal auf, wonach ein Prozesssteuerungssystem 20 vorgesehen ist, das in Verbindung mit einem Energieversorgungsnetz 22 steht. Das Energieversorgungsnetz 22 ist dabei in der Regel ein öffentliches elektrisches Energieversorgungsnetz 22, es kann jedoch auch ein Wärmenetz, beispielsweise ein Fernwärmenetz sein oder es kann ein firmeninternes oder kommunales elektrisches Netz oder Wärmenetz sein. Für dieses Energieversorgungsnetz 22 ist eine Zustandsgröße 26 definiert, die den Netzzustand bezüglich der eingebrachten Energiemenge beschreibt. Diese Zustandsgröße 26 kann beispielsweise die Netzfrequenz sein oder die in das Netz zugeführte Energiemenge, beispielsweise bezogen auf eine Fläche, Zeit und/oder Leitungslänge. Diese Zustandsgröße 26 spiegelt den Energieinhalt des Energieversorgungsnetzes 22 wider und zeigt insbesondere, ob genügend Energie für den momentanen Verbrauch vorliegt, ob ein Energieüberschuss oder ein Energiebedarf vorliegt. Die Zustandsgröße 26 kann auch indirekt gemessen werden, da beispielsweise an einer Strombörse bei hohen Einspeisungen von Energie in das Energieversorgungsnetz 22 sich der Strompreis erniedrigt. Somit kann die Zustandsgröße 26 für das Energieversorgungsnetz 22 auch der Strompreis sein. Ferner ist ein Schwellwert 24 für die Zustandsgröße 26 vorgesehen, der empirisch dafür steht, dass genügend Energie im Energieversorgungsnetz 22 vorliegt. Wenn ein Energieüberschuss im Energieversorgungsnetz 22 vorliegt, dann liegt es in der Regel daran, dass eine große Menge an regenerativ erzeugten Energien in das Energieversorgungsnetz 22 eingespeist werden.

Ist die Zustandsgröße 26 beispielsweise der Energiepreis an einer Strombörse, so steht das Prozesssteuerungssystem 20 mit dieser Strombörse in Verbindung und es wird über ein Signal ein Strompreis übermittelt, der, wenn er unter dem Schwellwert 24 liegt, dazu führt, dass die Wärmepumpe 12 in Betrieb genommen wird. Dabei kann es auch sein, dass das Prozesssteuerungssystem 20 mit einer Strombörse mit einer Leitwatte 48 des Energieversorgungsnetzes 22 in Verbindung steht. Bei dem gezielten Einschalten der Wärmepumpe 12 bei -in diesem Fall- Erreichen und Unterschreiten des Schwellwertes 24 wird ein netzdienliches Verhalten generiert, das das Energieversorgungsnetz 22 stabilisiert und somit für den Betreiber des Energieversorgungsnetzes 22 von Vorteil ist.

Da erneuerbare Energien jedoch unregelmäßig und unbeeinflussbar auftreten, so kann es sein, dass die Zustandsgröße 26 längere Zeit über dem Schwellwert 24 liegt, sodass die Wärmepumpe 12 nicht netzdienlich und somit auch nicht mit einem optimiert reduzierten CO₂-Ausstoß betrieben werden kann. In diesem Fall ist es zweckmäßig, dass bei längerem Unterschreiten des Schwellwertes 24 die Wärmepumpe 12 verstärkt betrieben wird, und der erster Wärmespeicher 28 auf Vorrat aufgeheizt und gegebenenfalls auch überhitzt werden kann. Das heißt, dass der Kondensor 16 in thermischer Interaktion mit dem Spülfluid 10 in der Spülfluid-Aufheizvorrichtung 44 und mit dem ersten Wärmespeicher 28 stehen kann. Dies kann sowohl unabhängig als auch gleichzeitig erfolgen. Der erste Wärmespeicher 28 wird dann anschließend zum Aufheizen des Spülfluids 10 verwendet, wenn die Wärmepumpe 12 aufgrund von mangelnden regenerativen Energiequellen nicht in Betrieb ist. Das Gleiche gilt für einen zweiten Energiespeicher, der in dem Abkühlvorgang des Spülfluids 10 integriert ist und mit der Spülfluid-Abkühlvorrichtung 40 thermisch in Interaktion steht. Dieser zweite Wärmespeicher 30 kann Wärme aus dem Abkühlvorgang aufnehmen, wenn die Wärmepumpe 12 nicht in Betrieb ist. Er kann diese Wärme dann auch für den Verdampfer 14 bereitstellen, oder er kann die Wärme anderweitig, beispielsweise in ein Fernwärmenetz einspeisen.

### Bezugszeichenliste

- 1: DAC Verfahren (Vorrichtung)
- 2: Kohlendioxid (CO2)
- 4: Gasgemisch
- 6: Sorptionsmittel
- 8: Sorbat
- 10: Spülfluid
- 10': dampfförmiges Spülfluid
- 10": flüssiges Spülfluid
- 12: Wärmepumpe
- 14: Verdampfer
- 16: Kondensor
- 18: Kältemittel
- 20: Prozesssteuerungssystem
- 22: Energieversorgungsnetz
- 24: Schwellwert
- 26: Zustandsgröße
- 28: erster Wärmespeicher
- 30: zweiter Wärmespeicher
- 32: Festbettreaktor
- 34: Durchströmungsvorrichtung
- 36: Ventilvorrichtung
- 38: Spülfluid-Zuführung
- 40: Spülfluid-Abkühlvorrichtung / Kondensor
- 42: CO2-Abtrennvorrichtung
- 44: Spülfluid-Aufheizvorrichtung / Verdampfer
- 46: Kältespeicher
- 48: Leitwarte

## Patentansprüche

1. Verfahren zum Absondern von Kohlendioxid (2) aus einem Gasgemisch (4), wobei das Gasgemisch (4) durch ein festes Sorptionsmittel (6) geleitet wird, wobei das im Gasgemisch (4) enthaltene Kohlendioxid (2) vom Sorptionsmittel (6) sorbiert wird und ein Sorbat (8) entsteht und ein Spülfluid (10) auf eine Temperatur erhitzt wird, die dazu geeignet ist, das Kohlendioxid (2) aus dem Sorbat (8) zu desorbieren und mit dem Spülfluid (10) auszuspülen, wonach das Spülfluid (10) zur Auslösung des Kohlendioxids (2) abgekühlt wird, **dadurch gekennzeichnet, dass**
- eine Wärmepumpe (12) vorgesehen ist, die einen Verdampfer (14) und einen Kondensor (16) aufweist, zwischen denen ein Kältemittel (18) zirkuliert und
- der Verdampfer (14) und das abzukühlende Spülfluid (10) in thermischer Interaktion gebracht werden und
- der Kondensor (16) mit dem zu erhitzenden Spülfluid (10) in thermischer Interaktion gebracht wird.

2. Verfahren nach Anspruch 1, **dadurch gekennzeichnet, dass**
- ein Prozesssteuerungssystem (20) vorgesehen ist,
- das in Verbindung mit einem Energieversorgungsnetz (22) steht und
- ein Schwellwert (24) für eine Zustandsgröße (26) des Energieversorgungsnetzes (22) festgelegt wird und
- der Kondensor (16) der Wärmepumpe (12) mit einem ersten Wärmespeicher (28) in thermischer Interaktion geschaltet wird, wenn der Schwellwert (24) erreicht wird.

3. Verfahren nach Anspruch 1 oder 2, **dadurch gekennzeichnet, dass** der erste Wärmespeicher (28) mit dem zu erhitzenden Spülfluid (10) in thermischer Interaktion gebracht wird.

4. Verfahren nach Anspruch 2 und 3, **dadurch gekennzeichnet, dass**, der erste Wärmespeicher (28) mit dem zu erhitzenden Spülfluid (10) in thermischer Wirkverbindung gebracht wird, wenn der Schwellwert (24) nicht erreicht ist.

5. Verfahren nach einem der vorhergehenden Ansprüche, **dadurch gekennzeichnet, dass** die Wärmepumpe (12) in der Art ausgestaltet ist, dass am Kondensor (16) eine Temperatur zwischen 100 °C und 160 °C erreicht werden.

6. Verfahren nach einem der vorhergehenden Ansprüche, **dadurch gekennzeichnet, dass** das Spülfluid (10) auf eine Temperatur erhitzt wird, die über seinem Siedepunkt liegt.

7. Verfahren nach einem der vorhergehenden Ansprüche, **dadurch gekennzeichnet, dass** das Spülfluid (10) Wasser ist oder zu mindestens 90 % aus Wasser besteht.

8. Verfahren nach einem der vorhergehenden Ansprüche, **dadurch gekennzeichnet, dass** ein zweiter Wärmespeicher (30) vorgesehen ist, der in thermischer Wirkverbindung mit dem Spülfluid (10) während dessen Abkühlung steht.

9. Verfahren nach Anspruch 8, **dadurch gekennzeichnet, dass** der erste und der zweite Wärmespeicher in thermischer Wirkverbindung gebracht werden.

10. Verfahren nach einem der vorhergehenden Ansprüche, **dadurch gekennzeichnet, dass** das Spülfluid in Gasform oder Dampfform durch das feste Sorbat geleitet wird.

11. Verfahren nach einem der vorhergehenden Ansprüche, **dadurch gekennzeichnet, dass** das Spülfluid als Kältemittel der Wärmepumpe verwendet wird

12. Vorrichtung zum Absondern von Kohlendioxid (2) aus einem Gasgemisch (4) mit
- einem Festbettreaktor (32) in dem ein Sorptionsmittel (6) anordenbar ist und
- einer Durchströmungsvorrichtung (34) zur Durchströmung eines Fluidgemischs (10) durch den Festbettreaktor (32),
- einer Ventilvorrichtung (36) zur wechselnden Freischaltung der Durchströmungsvorrichtung (34) und einer Spülfluid Zuführung (38), mittels derer Spülfluid (10) durch den Festbettreaktor (32) leitbar ist,
- einer Spülfluid-Abkühlvorrichtung (40),
- einer Kohlendioxid-Abtrennvorrichtung (42) zur Abtrennung des Kohlendioxids (2) aus dem Spülfluid (10) und
- einer Spülfluid Aufheizvorrichtung (44) zum Aufheizen des Spülfluids (10) zum weiteren Einbringen des Spülfluids (10) über die Ventilvorrichtung (36) in den Festbettreaktor (32), **dadurch gekennzeichnet, dass**
- eine Wärmepumpe (12) vorgesehen ist, die einen Verdampfer (14) und einen Kondensor (16) aufweist, wobei
- der Verdampfer (14) in thermischer Interaktion mit der Spülfluid-Abkühlvorrichtung (40) steht und
- der Kondensor (16) in thermischer Interaktion mit der Spülfluid Aufheizvorrichtung (44) steht.

13. Vorrichtung nach Anspruch 11, **dadurch gekennzeichnet, dass** die Spülfluid-Aufheizvorrichtung (44) Teil des Verdampfers der Wärmepumpe (12`) ist.

14. Vorrichtung nach Anspruch 11 oder 12, **dadurch gekennzeichnet, dass** die Spülfluid-Abkühlvorrichtung (38) Teil des Kondensors der Wärmepumpe (12`) ist.

15. Vorrichtung nach einem der Ansprüche 12 bis 14, **dadurch gekennzeichnet, dass** das Spülfluid das Kältemittel der Wärmepumpe (12`) ist.
